(19) Europäisches Patentamt
European Patent Office
Office européen des brevets

(11) Publication number: 0 354 474 A2

# (12) EUROPEAN PATENT APPLICATION

(21) Application number: 89114343.0

(51) Int. Cl.[4]: A01N 1/02 , A01N 3/00

(22) Date of filing: 03.08.89

(30) Priority: 04.08.88 US 228477

(43) Date of publication of application: 14.02.90 Bulletin 90/07

(84) Designated Contracting States: BE DE FR GB IT NL SE

(71) Applicant: Glonek, Thomas
803 Highland Avenue
Oak Park Illinois 60304(US)

Applicant: Greiner, Jack V.
19 Nassau Drive
Winchester Massachusetts 01890(US)

(72) Inventor: Glonek, Thomas
803 Highland Avenue
Oak Park Illinois 60304(US)
Inventor: Greiner, Jack V.
19 Nassau Drive
Winchester Massachusetts 01890(US)

(74) Representative: Bunke, Holger, Dr.rer.nat. Dipl.-Chem. et al
Patentanwälte Prinz, Leiser, Bunke & Partner
Manzingerweg 7
D-8000 München 60(DE)

## (54) Method and composition for cryopreservation of tissue.

(57) Cryoprotectant agents and solutions are disclosed that are phosphomono and phosphodiester catabolites of phosphoglycerides. The cryoprotectants permit cold-preservation of cellular material minimizing damage caused by freezing and thawing. The cellular material cooled and/or frozen in accordance with the invention may be of animal or vegetable origin.

EP 0 354 474 A2

Xerox Copy Centre

# METHOD AND COMPOSITION FOR CRYOPRESERVATION OF TISSUE

## BACKGROUND OT THE INVENTION

### I. Field of the Invention

This invention relates to the cryopreservation of tissue and more particularly, to cryopreservation solutions that are diffused into tissue to prevent damage during refrigeration and/or freezing and thawing.

### 2. Description of the Prior Art

It is known that cryobiologists have had limited success in the freezing, thawing and reviving of various types of cells and tissue. However, using conventional techniques, cryobiologists have been unsuccessful in freezing complex cellular masses such as organs. With less complex cellular materials or tissues such as corneas, cryobiologists have enjoyed greater success, but nonetheless, upon transplantation of corneas preserved by freezing using conventional cryopreservatives, an unacceptably high incidence of graft failure has been encountered.

It is generally accepted that cellular damage during freezing and thawing is caused by intracellular ice crystal formation that is believed to disrupt cell parts or destroy the network of filaments that maintain the cells intact. To avoid this form of damage, cryobiologists cool the cellular samples slowly so that water contained within the cell membranes or walls has sufficient time to diffuse through the cell membranes or walls before it freezes. However, if the cooling rate is too slow and too much water is drawn out of the cell during the formation of extra-cellular ice, high concentration of salts may be left behind within the cell that denature proteins and destroy cellular structure. There is also a growing body of evidence to suggest that dehydration damage is caused by changes in cell volume where the exodus of water makes the cell shrink and damage membrane material whereby the cell leaks or bursts upon rehydration during thawing.

Another approach to cellular cryopreservation is a technique known as vitrification where the cellular material is frozen at an extremely rapid rate whereby water molecules do not have the opportunity to form ice crystals. Instead, the cellular mass is transformed into a highly viscous, super cooled liquid. Though this method shows promise, to date, the process has not been successfully used to vitrify biological samples that could not be cryopreserved by conventional means.

A further method used for cryopreservation in combination with vitrification procedures, comprises perfusion of a cryoprotectant into the cellular mass prior to freezing. The most commonly used cryoprotectant is glycerol. It is thought that the cryoprotectant acts as an "antifreeze" solution that protects cell parts during freezing. However, a difficulty with the use of a cryoprotectant is that at the high concentration levels required for the cryoprotectant to function as an antifreeze, the cryoprotectant is toxic and may cause cellular damage or destruction.

The method in most common use at the present time for freezing cellular material is the aforesaid combination of the cryoprotectant and vitrification. By careful balance of the cooling rate and the concentration of the cryoprotectant, those skilled in the art have been able to preserve human blood cells, corneas, skin, pancreatic islets and other whole tissues and tissue culture cells. However, damage to the cellular material, frequently extensive damage, is still experienced using these methods. Moreover, conventional methods are not suitable for cryopreservation of more complex tissues and organs in that such materials contain a multitude of cells and cell types, each of which are thought to require a unique freeze - thaw regimen. In addition, the above described method may avoid ice formation within the cells, but ice still forms outside of the cells where it can damage blood vessels and threaten the architectural integrity of an organ.

One approach to avoiding the problems described above involves freezing the cellular material under superatmospheric pressure. This work, performed by Fahy and described in Science News, Volume 132, August 29, 1987, at page 139, involved perfusion of rabbit kidneys with highly concentrated mixtures of cryoprotectants followed by cooling the kidneys to about -150 °C under 1,000 atmospheres of pressure. According to Fahy, the superatmospheric pressure counteracts the expansion of water necessary to form ice and reduces the required amount of potentially toxic cryoprotectant required for preservation. Fahy reports that the cryoprotectant associates with water molecules making it more difficult for the molecules to

coalesce into an orderly ice crystal lattice. The cryoprotectant is said to lower the freezing point and raise the temperature at which the material turns into an amorphous glass. Fahy reports that a mixture of cryoprotectants can minimize the toxicity, maximize the material's glass forming ability and balance the cryoprotectant levels inside and outside of the cells. According to Fahy, using cryoprotectants and superatmospheric pressures, the samples do not have to be cooled at very rapid rates to avoid ice formation. This is reported to make it easier to quickly and thoroughly cool objects as large as organs though it is believed that organs have not been successfully cryopreserved using this method at this time.

## SUMMARY OF THE INVENTION

The subject invention involves new cryoprotectants for preserving animal and vegetable (hereafter generically "biological") cellular material at reduced temperatures. The cryoprotectants are non- toxic in concentrations required for cryopreservation and permit cryopreservation using simplified procedures that avoid the requirement for the extreme care, carefully controlled cooling regimens and other extraordinary procedures such as the use of high pressure as discussed above.

The cryoprotectants used in accordance with the invention are phosphomono- and phosphodiester catabolites of a phosphoglyceride free of fatty acid residues, thus excluding lysophospholipid derivatives. The phosphoesters contemplated herein naturally occur in low concentration in the cellular tissue of animals and various plants though the concentration of the phosphoesters and their compositions vary dependent upon the organ in which they are found, the health and condition of the tissue and the species.

The process of the invention comprises diffusion of the cryoprotectant of the invention into the cellular material to be preserved by temperature reduction to temperature approaching or exceeding freezing temperatures. Diffusion is accomplished using art-recognized procedures such as, for example, direct immersion of the cellular material into a dilute aqueous solution of the phosphoester catabolite. For reasons not fully understood, cellular material immersed in the solution of the cryoprotectant of the invention unexpectedly preferentially extracts the phosphoester catabolite from its solution and adsorbs it into its cellular structure. Following diffusion of the cryoprotectant into the cellular material, the cellular material is cooled in accordance with conventional procedures, preferably by slow cooling that may proceed to the frozen (solid) state. It has been observed that preservation may take place in accordance with the invention at temperatures well below the normal freezing point of water without the formation of ice occurring within or external to the cellular material. This suggests that the cryoprotectant of the invention functions, at least in part, as a freezing point depressant or antifreeze and further inhibits the process of kinetics of ice formation.

Following temperature reduction of the biological cellular material to preservation temperature, it may be preserved for an indefinite period of time. When ready for use, the temperature of the material is slowly increased to a desired temperature. It has been found that with use of the cryoprotectant of the invention, there is a significant reduction in cell damage following cryopreservation as compared to cellular material preserved under the same conditions, but treated with a commercially available cryoprotectant.

The cryoprotectants of the invention are catabolites of phosphoglycerides that are normally found in living things. Consequently, compared to other cryoprotectants known to the art, the phosphoester catabolities of the subject invention may be used in relatively high concentration without apparent toxicity. This is supported by the observation that wintering animals naturally acquire high levels of the catabolite glycerol phosphorylcholine compared to the relatively low levels of this material during nonwintering periods and further, by the observation that there are high levels of glycerol phosphoryl-choline in semen. For this and other reasons to be discussed, the cryoprotectants of the invention comprise an improvement over the cryoprotectants of the prior art.

The cryoprotectants of the prior art have been used for the preservation of a variety of cellular material such as oocytes, sperm, embryos, blood cells, tissues compound of a few cellular layers such as corneas, and heart valves. However, in the prior art, the cryoprotectants have not been suitable for preservation during freezing of more complex cellular material such as organs - e.g., hearts, livers and kidneys. There are many reasons for the limitation on the use of prior art cryoprotectants. One limitation is the inability of cryoprotectants to penetrate deeply into the tissue mass whereby protection against damage caused by freezing involves only superficial or outer tissue. The cryoprotectants of the subject invention readily diffused into and through tissue material, and consequently, cryopreservation techniques and uses can be extended by the use of the cryoprotectants of the subject invention.

## DESCRIPTION OF THE DRAWINGS

In the drawings:

Figure 1 is a composite of photomicrographs comprising a biomicrograph of a cornea in the upper left portion of the drawing, a light micrograph of a cross section of the cornea in the upper right-hand corner of the drawing, and an electron micrograph of the cornea in the bottom portion of the drawing cooled and warmed using a prior art cryoprotectant and illustrates results obtained in Example 4 below;

Figure 2 is a composite of photomicrographs prepared and arranged in the same way as Figure 1 of a cornea cooled and warmed using the cryoprotectant of the subject invention and illustrates results obtained in Example 4 below;

Figure 3 is a composite of light micrographs of a section of a rabbit liver (top) and kidney (bottom) parenchyma colled and frozen using a prior art cryoprotectant; and

Figure 4 is a composite of light micrographs of a section of a rabbit liver (top) and kidney (bottom) parenchyma cooled and warmed using the cryoprotectant of the subject invention.

Figure 5 is a composite of electron micrographs of a cornea frozen in liquid nitrogen and thawed using a prior art cryoprotectant: and

Figure 6 is a composite of electron micrographs of a cornea frozen in liquid nitrogen and thawed using the cryoprotectant of the subject invention.

## DESCRIPTION OF THE PREFERRED EMBODIMENTS

In accordance with the invention, a cryoprotectant is diffused into a tissue mass, prior to cooling or while cooling, to storage temperature. The cryoprotectant contemplated by the invention is a phosphomono- or phosphodiester catabolite of a phosphoglyceride freed of fatty acid residues, thus excluding lysophospholipids. Phosphoester catabolites are naturally occurring substances caused by the action of enzymes on phospholipids during metabolism though they may be synthesized using art recognized procedures. Accordingly. the term phosphomono- or phosphodiester catabolite, as used in accordance with the description herein, is meant to identify the chemical structure of the cryoprotectants of the invention regardless of whether the material is naturally occurring or synthesized.

The phosphoglycerides that are the source of the cryoprotectant in accordance with the invention may be represented by the following general formula:

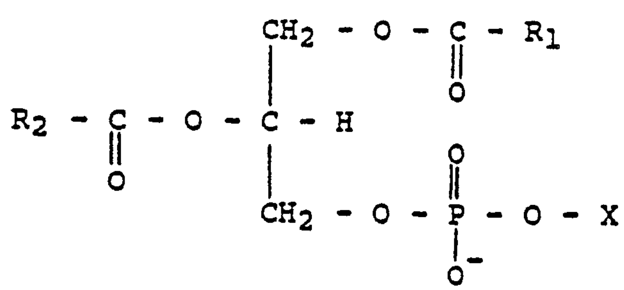

,

where $R_1$ and $R_2$ are fatty acids and X is a residue having an alcohol (-ol) functional group, typically with a residue molecular weight not exceeding 300 atomic weight units (daltons). Catabolism of the above-identified compound occurs by the action of various enzymes. This enzymatic modification of phosphoglycerides is well known in the art. For example, it is known that the enzyme phospholipase $A_1$ removes the fatty acid from the 1 position of the glyceride backbone while phospholipase $A_2$ removes the fatty acid from its 2 position. Likewise, phospholipase B, a mixture of phospholipase $A_1$ and $A_2$, brings about the successive removal of the two fatty acid residues from the glyceride backbone. Phospholipase C hydrolyzes the bond between the phosphoric acid and glycerol while phospholipase D removes the polar head group to leave a phosphatidic acid. These enzymatic reactions are well known in the art and described, for example, by Lehninger, Biochemistry, 2 Ed., Worth Publishers, New York, pp. 279-306, especially, 290-291, and structurally depicted in chart form by Michard, Gerhard, Biochemical Pathways, Boehringer Mannaheim Biochemicals, Indianapolis, Chart sections C7 to C8, 1982, both incorporated herein by reference.

In accordance with the definition of the cryoprotectant given above, lysophospholipids, those products formed by cleavage of a single fatty acid group from the glyceride backbone, are excluded from the scope of this invention. The reason for exclusion of this class of materials is that while lysophospholipids can be tolerated in cellular material in limited concentrations, higher concentrations are known to be toxic and injurious to cellular integrity.

Preferred phosphoester cryoprotecant compounds for purposes of the invention conform to the following general formula:

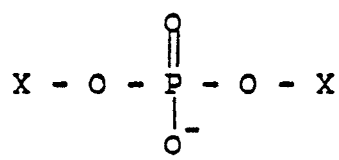 ,

where each X is independently a residue as decribed above. Because of their ready availability, glycerol phosphorylcholine, glycerol phosphorylethanolamine, glycerol phosphorylserine, glycerol phosphoryglycerol, glycerol phosphorylinositol, phosphorylglycerol, phosphorylcholine, phosphorylehanolamine, and serine ethanolaminephosphoryl dieseter are preferred. More preferred materials are the glycerol 3-phosphoryl compounds and the most preferred material is glycerol 3-phosphorylcholine.

The most preferred cryoprotectant compositions of the invention comprise mixtures of the catabolites of the phosphoglycerides.

The catabolites of the phosphoglycerides are naturally occurring substances in most tissue. The concentration of the catabolite naturally occurring in tissue varies dependent upon several factors including the health of the tissue and the source of the tissue within living things. A discussion of these materials and their detection, distribution within the body and methods for analysis are discussed by Barany and Glonek, Identification of diseased states by P-31 NMR, In: Gorenstein D (Ed): Phosphorus-31 NMR: Principles and Applications, New York, Academic Press, 1984, pp. 511-545; Greiner et al, Investigative Opthalmology and Visual Science, "Distribution of phosphatic metabolites in the crystalline lens," Vol. 26, pp. 537-544, 1985; Ferguson et al, Science, "Glycosyl-Phosphatidyl Inositol Moiety That Anchors Trypanosona Brucei Variant Surface Glycoprotein to the Membrane," Vol. 239, pp. 753-759, February 12, 1988; Riar et al, Fertility and Sterility, "Study of the Physiology and Biochemistry of Mammalian Epididymis: Biochemical Composition of Epidymis. A Comparative Study," Vol. 24, No. 5, pp. 355-363, May, 1973 and Cohen et al, Neurochemical Research, "P-31 Nuclear Magnetic Resonance Analysis of Brain: Normoxic and Anoxic Brain Slices," Vol. 9, No. 6, pp. 785-801, 1984, all incorporated herein by reference for their teaching of the catabolites of phosphoglycerides, their structures and the detection of the same.

Though the concentration of the phosphoglyceride catabolites naturally occurring in tissue under normal, non-cryopreservation conditions varies considerably, it is believed that the concentration is less than that required to sustain cooling and/or freezing and thawing of the tissue. Therefore, in accordance with the invention, the concentration of the phosphoglyceride catabolites must be increased substantially before cellular material may be frozen in accordance with the process of the invention. In general, the concentration of the catabolite of the phosphoglyceride within the cellular material is at least two times the amount normally contained in the cellular material and preferably in an amount at least ten times that normally contained in said material. This concentration may vary between 0.3 percent of the total weight of the cellular material to a toxic level or saturation and preferably between 3.0 percent and saturation. In a preferred embodiment of the invention, the catabolite is diffused into the cellular material until the cellular material is saturated with the catabolite. This concentration of the catabolite required for saturation of the cellular material will vary dependent upon the nature of the cellular material to be frozen.

The cryopreservation solution of the invention is an aqueous solution of the cryoprotectant together with other ingredients such as pH adjustors, buffers, osmolarity adjustors and preservatives that are not toxic to the tissue being preserved. The cryoprotectant in an aqueous solution ready for use preferably varies from about 1 to 500 mM and more preferably between about 10 and 50 mM. This concentration is not critical, but it has been found to be a desired range for diffusion of the cryoprotectant into most cellular material. The pH adjustor is added to the solution in an amount sufficient to provide a physiologically acceptable pH of between 6.5 to 7.5. Suitable pH adjustors include, for example, sodium hydroxide, potassium hydroxide, hydrochloric acid, phosphoric acid, sulfuric acid, etc. Suitable buffers include, for example, inorganic phosphate, ethylenediaminetetraacetic acid, tris(hydroxymethyl)aminomethane, bicarbonate, etc. The osmolarity adjustor is added in an amount sufficient to maintain osmolarity at between 200 to 500 mOsm/kg

and preferably between 300 and 400 mOsm/kg. Suitable osmolarity adjustors include, for example, sodium chloride and glucose. Suitable preservatives include, for example, sorbic acid, benzalkonium chloride, ethylenediaminetetraacetic acid and gentamicin.

The cryoprotectant is diffused into the cellular material from solution using art-recognized procedures. Following removal of the cellular material from its host, a simple procedure might involve immersion of the cellular mass into the above described aqueous solution of the cryoprotectant. Once the cellular mass is immersed in the cryopreservation solution, for reasons not fully understood, the cellular mass selectively extracts the cryoprotectant from is solution. This results in concentration of the cryoprotectant within the cellular mass.

The time of immersion of the cellular mass in the solution of the cryoprotectant is dependent upon the properties of the cellular mass to be preserved. For example, the cryoprotectant rapidly diffuses into low density materials such as corneas with immersion times of from one minute to one hour duration being suitable for such materials. Longer times up to three hours or more might be required for materials of greater density.

Diffusion of the cryoprotectant into the cellular mass by immersion into solution is suitable for lower density materials such as corneas and skin tissue. For materials of higher density, such as organs - i.e., hearts, kidneys, livers, etc., it may be more desirable to diffuse the cryoprotectant into the cellular mass by injection or by pumping (perfusing) the cryopreservative through blood vessels passing through the organ.

The cryoprotectants of the invention are also suitable for the cryopreservation of liquids such as semen and blood. In this embodiment of the invention, an appropriate quantity of the cryoprotectant in concentrated form is mixed into the preservative liquid so that the final concentration in the liquid is within the concentration range discussed above.

Following diffusion of the cellular mass with the cryoprotectant, the cellular mass is prepared for cryopreservation. To accomplish cryopreservation, the temperature of the cellular mass is reduced to preferably below 0 °C and more preferably, to a temperature ranging between 0 and -40 °C. The cellular mass containing the diffused cryoprotectant is cooled within a period of time ranging from about five minutes up to twenty four hours. Preferably, the cellular mass is cooled gradually over a period of time of from one to four hours. Placing a cellular mass at room temperature into a cooling chamber preset to a desired cryopreservation storage temperature is a satisfactory means for slow cooling of the cellular mass to the desired storage temperature.

The solutions of the subject invention are suitable for the cryopreservation of both animal and vegetable cellular material. It is particularly useful for the cryopreservation of corneas; tissues of the cardiovascular system such as heart, blood, and blood vessels; tissues of the respiratory system such as lung tissue; tissues of the digestive system such as liver and pancreas tissues; tissues of the urinary tract such as kidney tissues; neural tissues; tissues of the musculoskeletal system such as tendon; and embryonic tissue. Examples of vegetable-type materials that would be preserved include, for example, bulbs, tubers, rhizomes, embryos of plants.

The invention will be better understood by reference to the following examples:

## Example 1

Corneas were removed form their host animal for purposes of this example using the procedure described below.

A lethal intramuscular dose of sodium pentobarbital was administered to a cat and its eyes were promptly enucleated. Globes were secured in sterile gauze and examined in order to confirm that the corneas were clear with intact epithelium, minimal Descemet's folds, and absent guttata. During enucleation, special care was taken to avoid damaging or touching the epithelium. A scleral groove incision 1 mm from the limbus of each eye was extended circumferentially with a Bard Parker #15 scalpel blade. Over a 3 mm region of this incision a depth was made so the underlying uveal tissue appeared as a knuckle. At this point, a curved corneal scissors was used to enter the eye though avoiding damage to the uveal tissue such that the anterior chamber was maintained, and the cornea was excised. During excision, care was taken to prevent excessive corneal bending and iris from touching the corneal endothelium. Corneas with attached scleral ring were then placed in medium in a standard eye bank viewing chamber on a platform with endothelial side up. Two 1-year old cat corneas excised in the above manner were placed in a McKary-Kaufman tissue culture storage medium (standard eye bank storage medium having a pH of 7.4 and an osmolality of 320 ± 5 mOsm/kg -hereafter M-K medium) contained in an NMR sample tube. A volume of glycerol 3-phosphorylcholine (GPC) was added to the M-K medium in an amount sufficient to provide an M-K solution 30mM in GPC. The GPC was added to allow pH determination of an ex vivo cornea during an incubation period. Corneas were stored in the medium at room temperature for a period of 1 hour, after which the corneas were rinsed several times in a standard M-K medium free of GPC. P-31 NMR analysis was run on the corneas, and both the GPC and Pi signals were recorded. The degree of shift in the Pi (pH sensitive) magnetic resonance signal with respect to the GPC (pH insensitive) magnetic resonance signal allowed pH determination according to known and established methods (Barany and Glonek, 1984), and was found to be stable at pH 7.2. The GPC signal intensity emanating from the cornea increased to 30 to 40% of the total detectable phosphorus as a consequence of the incubation period. The experiment was repeated 10 times. After corneas were removed from the test medium, P-31 NMR was performed on the medium alone and it was discovered that little to no GPC was present in the medium; as most of the 30 mM GPC originally added to the medium had become concentrated in the cornea. The cornea remained transparent and the GPC signal in the cornea was greatly increased. The amount of GPC taken up by the cornea and the amount of GPC remaining in the cryopreservation solution depends on the incubation time, size of the cornea, and the amount of preservation medium.

## Example 2

Four 6-month old New Zealand white rabbit corneas were excised using standard methods as described in Example 1. One of each pair was immersed in a control K-Sol tissue culture medium (standard state-of-the-art eye bank storage medium having a pH of 7.4 and an osmolarity of 320 ± 5 mOsm/kg) and the contralateral cornea was immersed in K-Sol medium with 30mM concentration of GPC. Each cornea was preserved in a standard eye bank storage container. Those corneas in the control K-Sol solution were refrigerated at 4 °C whereas those corneas in the experimental K-Sol solution containing GPC were refrigerated at approximately -20 °C. Refrigeration was continued for a 6-week period after which time examination of the corneas through the transparent storage container revealed that at -20 °C temperature, the storage media were frozen. Warming of the corneas was accomplished by removing the storage chambers from refrigeration and allowing them to sit at room temperature for 2 hours. The observation was made that the corneas contained in the frozen K-Sol media containing GPC were transparent, whereas the control corneas had lost transparency. Transparency was graded on a 1 to 5 scale with 1 being transparent, 2 with trace haze, 3 with mild cloudiness, 4 with moderate cloudiness, and 5 with severe cloudiness. After two hours at room temperature, all corneas were gently transferred into storage chambers with fresh K-Sol medium. Corneas were then examined by light microscopy and transmission electron microscopy, using standard routine fixation, embedding, and staining techniques.

By light and transmission electron microscopy there were differences between the experimental and control corneas indicative of improved preservation of experimental cornea in contrast to controls. Of interest is the fact that the experimental corneas remained clear during the 5 hour period at room temperature while the specular microscopic and redox fluorometric analyses were done. Even after fixation for microscopy in a glutaraldehyde fixative, it was readily appreciated that the experimental corneas were clear and the control corneas had loss of transparency. The results are shown in the following Table I.

Table 1

| Corneal Transparency | | | | |
|---|---|---|---|---|
| | Cnt. 1 | Exp. 1 | Cnt. 2 | Exp. 2 |
| 0 time warming (as removed from refrigerator) | 4 | frozen | 5 | frozen |
| 2 hrs (warmed to room temp.) | 3-4 | 1 | 4 | 1 |
| 5 hrs (following spec micro & redox) | 4 | 1 | 4-5 | 1-2 |
| 6 hrs (following glutaraldehyde fixative) | 4 | 1 | 5 | 1-2 |

## Example 3

The above Example was repeated with 4 rabbits (8 corneas, 4 pairs). Again the experimental solution

(K-Sol with 30 mM GPC) treated corneas were at a colder temperature (-10° C) than the control. It was observed that no freezing occured for 3 weeks at this temperature though at 4 weeks, the media containing 2 of the 4 corneas at the cold -10° C temperature were frozen. Since the corneas were disturbed for examination on a weekly basis, it is believed that physical disturbance of the super cooled medium may have resulted in crystallization of the media. It should be noted that the degree of depression of the freezing point of the experimental K-Sol containing the GPC can not be entirely explained by known chemical theory involving freezing point depression only. GPC is believed to be responsible for this unusual observation. After 4 weeks, corneas were removed from refrigeration and allowed to stand at room temperature for 1 hour. After standing at room temperature for 1 hour, both experimental and control corneas were transferred into storage chambers containing fresh standard K-Sol medium. Corneas were graded for transparency using the same scale as described in Example 2 above. The results are shown in the following table:

Table 2

| Corneal Transparency | | | | | | | | |
|---|---|---|---|---|---|---|---|---|
| | cnt1 | exp1 | cnt2 | exp2 | cnt3 | exp3 | cnt4 | exp4 |
| 0 hours (removed from refrig) | 3 | 1-2 | 4 | froz | 5 | 2 | 5 | froz |
| 1 hour (at room temperature) | 3 | 1-2 | 4 | 1 | 4 | 2 | 5 | 2-3 |
| 2 hours (1 hr in fresh K-Sol) | 3 | 1-2 | 4 | 1 | 5 | 1-2 | 5 | 1-2 |
| 6 hours (at room temperature) | 4 | 2 | 4 | 1 | 4 | 2 | 5 | 3 |
| 9 hours (at room temperature) | 4 | 2 | 4 | 2 | 5 | 3 | 5 | 3 |

It should be noted that in those cases were corneal clouding was observed in corneas from experimental solutions, with the exception of some stromal haze (minimal) in experimental cornea 4, the loss of transparency appeared restricted to the epithelium (a portion of the cornea that is replaced by the host after transplantation).

Example 4

The procedure of Example 3 was repeated for a control and experimental sample except that the temperature was adjusted to within a range cycling from -4° C to -8° C to avoid freezing of the K-Sol media. Further, the corneas were preserved under refrigeration for a period of one month prior to warming. Photomicrographs were made of the corneas following warming to room temperature for both the control and experimental solutions. These photomicrographs are reproduced as Figure 1 for the control and Figure 2 for the experimental.

At the top left portion of Figure 1, there is shown an eye bank storage chamber containing the control cornea with white scleral rim. The cornea is oriented such that the endothelial concave surface is up. There is shown a loss of corneal transparency as evidenced by decreased clarity of the underlying supporting posts. The photomicrograph in the top right portion of the drawing is a light micrograph of the corneal epithelium and anterior stroma. The epithelium is edematous. The epithelial surface is uneven. The superficial squamous cells are loosely separated. There is increased extracellular space and swelling of the cells in the intermediate cell layers. The basal layer has evidence of degenerating cells. The underlying stromal fibers are compact. The bottom portion of Figure 1 is a transmission electron micrograph of Descemet's membrane and underlying endothelium. The endothelial cell layer is edematous. The nuclei are intensely strained. The cytoplasm has large basal vacuoles and there is loss of cytoplasm. There are large intercellular spaces present between the basal cell border of the endothelial cells and Descemet's membrane.

At the top left portion of Figure 2, there is shown an eye bank storage chamber containing the experimental cornea with white scleral rim. Again, the cornea is oriented such that the endothelial concave surface is up. For this cornea, corneal transparency is maintained and apparent with clarity of the underlying storage chamber supporting posts. The photomicrograph in the top right portion of the drawing is a light micrograph of the corneal epithelium and anterior stroma. The epithelium surface is generally even. The superficial epithelial squamous cell layers are intact. There is relatively mild edema in the intermediate epithelial cell layers as recognized by cellular swelling. The basal layer is intact. The

underlying stromal fibers are compact. The bottom portion of Figure 2 is a transmission electron micrograph of Descemet's membrane and underlying endothelium. The endothelial cells have few intracellular vacuoles and minimal loss of cytoplasm.

Example 5

The above Example 3 was repeated with 4 rabbits (8 corneas, 4 pairs). Again the experimental solution (K-Sol with 30mM GPC) treated corneas were at a cold temperature ranging between -4° C and -8° C. Both experimental and control corneas were at the same temperature. It was observed that no media freezing occurred for 2 weeks at this temperature. Also harvested at the time of enucleation for cornea tissues were samples from the liver and samples from one of the kidneys which were cooled under the same conditions as the corneas. Two samples were harvested from each animal and one sample was used for control and the other for experimental. After the two week period, corneas were removed from refrigeration and allowed to stand at room temperature for 1 hour. After standing at room temperature for 1 hour, both experimental and control corneas were transferred into storage chambers containing fresh standard K-Sol medium. Corneas were graded for transparency using the same scale as described in Example 2 above and the results paralleled the results reported for Example 2. Photomicrographs were made and corneas fixed for light and transmission electron microscopy. The results were similar to those obtained and depicted in Figures 1 and 2 for the control and experimental corneas, respectively in the above Example 4.

Photomicrographs were also made for the liver and kidney tissues. These photomicrographs are shown as Figures 3 and 4 of the drawings where Figure 3 is a composite of photomicrographs of a light micrographic section of the rabbit liver (top) and kidney (bottom) cooled and warmed using the prior art cryoprotectant (the control) and Figure 4 is a composite of photomicrographs of a section of the rabbit liver (top) and kidney (bottom) cooled and warmed using the cryoprotectant of the subject invention (the experimental). In the case of the liver tissue, as can be seen from the light micrographs, there was notably less vacuolation and less cellular damage in general in the experimental samples in contrast to the control samples. In the case of the kidney tissue, there was less tubular disruption, less vacuolation, and less cellular damage in general in the experimental samples in contrast to the control samples. In conclusion, there was a marked difference between the experimental and control samples including cornea, liver, and kidney tissues with a notably more pathologic status present in the case of the control non-GPC-treated groups.

Example 6

The above Example 3 was repeated with five 6-month old New Zealand white rabbits (10 corneas, 5 pairs).

For each of the five pairs of corneas, one cornea was immersed in control K-Sol medium and the contralateral cornea was immersed in K-Sol medium containing 30 mM concentration of GPC. Each cornea preserved in a standard eye bank storage container was photographed, and after 4 hours at room temperature during which time the samples were gently agitated, 3 pair of the control and experimental corneas were removed from their liquid media and frozen in liquid nitrogen. The other two pair of control and experimental corneas, in their liquid media, were refrigerated in a temperature monitored freezer compartment of a refrigerator maintained at -20° C. In the case of the corneas frozen in liquid nitrogen, they were contained in polyallomer tubes containing the liquid nitrogen for 5 minutes in a liquid nitrogen cooled stainless steel bath after which time, they were reimmersed in the control or experimental media and permitted to thaw to a temperature of 4 degrees centigrade. In the case of the cornea pairs refrigerated in their liquid media for 24 hours, the media which had frozen were permitted to thaw in a standard eye bank chamber. The thawing process for both liquid nitrogen frozen and freezer frozen tissues was conducted over a 24 hour period after which the materials were warmed to room temperature over a 2 hour period and the degree of clarity was photographically documented.

Transparency was graded on a 1-5 scale with 1 being transparent, 2 with trace haze, 3 with mild cloudiness, 4 with moderate cloudiness, and 5 with severe cloudiness using three examiners in a blind study, and results paralleled Example 3 for all five pairs of corneas. After photography, all corneas were prepared for light and transmission electron microscopy. The corneas refrigerated in the frozen media exhibited light and electron microscopic results paralleling the results reported in Example 4 and Figures 1 and 2. The observations arising from transmission electron microscopy for the liquid nitrogen treated cornea

pairs follow.

The corneal epithelium of control (untreated) samples (3 corneas) revealed disrupted surface microprojections and cells detaching from the corneal surface (left portion of Fig. 5), whereas the corneal epithelium of experimental (PM treated) samples (3 corneas) revealed an intact surface with normal microprojections (left portion of Fig. 6). In the control (untreated) samples, vacuolation, decreased electron density, and loss of cytoplasm characterized most superficial cells and underlying squamous cells (left portion of Fig. 5), whereas in the experimental samples there was minimal vacuolation of the superficial cells (left portion of Fig. 6). In general, the epithelium of the experimental samples had a relatively uniform electron density indicative of a well-preserved epithelium (left portion of Fig. 6). The deeper wing cells and basal cells were intact and appeared within normal limits in both the control (left portion of Fig. 5) and experimental (left portion of Fig. 6) samples. The epithelial basement membrane was intact in both control (left portion of Fig. 5) and experimental (left portion of Fig. 6) samples.

The corneal stroma appeared within normal limits in both control (left portion of Fig. 5) and experimental (left portion of Fig. 6) samples.

Only one of the four control (untreated) samples revealed an intact endothelium and in fact, one of the control samples revealed 100% loss of endothelium, whereas the endothelium of experimental (PM treated) corneas was intact in all four samples. There were numerous and enlarged cytoplasmic vacuoles in the control (untreated) corneas (right portion of Fig. 5), whereas in contrast, the endothelium in experimental samples was much less vacuolated (right portion of Fig. 6). There were numerous nuclei with nearly complete loss of nucleoplasm in the case of control corneas (right portion of Fig. 5), whereas a majority of nuclei showed nucleoplasm with good electron density in the case of the experimental corneas (right portion of Fig. 6).

## Claims

1. Biological cellular matter having diffused therein a cryoprotectant having the chemical composition of a phosphomono-or phosphodiester catabolite of a phosphoglyceride free of fatty acid residues in a concentration at least twice the concentration of the catabolite normally found in said matter.

2. The cellular matter of Claim 1 where the cryoprotectant is a mixture of one or more members selected from the group of phophomono and phosphodieseter catabolites of a phoshoglyceride.

3. The cellular matter of claim 1 separated from its host.

4. The cellular matter of claim 1 where the cryoprotectant comprises at least one glycerol phosphoryl ester.

5. The cellular matter of claim 1 where the cryoprotectant is selected from the group of glycerol phosphorylcholine, glycerol phosphorylethanolamine, glycerol phosphorylserine, glycerol phosphorylglycerol, glycerol phosphorylinositol, phosphorylglycerol, phosphorylcholine, phosphorylethanolamine, and serine ethanolaminephosphoryl diester.

6. The cellular matter of claim 4 where the cryoprotectant is glycerol phosphorylcholine.

7. The cellular matter of claim 4 where the cryoprotectant is glycerol phosphorylethanolamine.

8. The cellular matter of claim 1 where the concentration of the cryoprotectant within the cellular matter is at least 0.3 percent by weight of the total weight of the cellular matter.

9. The cellular matter of claim 1 having a temperature not exceeding 0 °C.

10. The cellular matter of claim 1 where the cellular matter is of vegetable origin.

11. The cellular matter of claim 1 where the cellular matter is of animal origin.

12. The cellular matter of claim 11 where the cellular matter is selected from the group consisting of corneas, blood, tissue of the cardiovascular system, tissue of the respiratory system, tissue of the digestive system, tissue of the urinary tract, neural tissue, tissue of the musculoskeletal system and embryonic tissue.

13. The cellular matter of claim 12 where the cellular matter is skin.

14. The cellular matter of claim 12 where the cellular matter is a cornea.

15. The cellular matter of claim 12 where the cellular matter is blood.

16. The cellular matter of claim 12 where the cellular matter is semen.

17. A process for preserving biological cellular matter, said process comprising diffusing a cryoprotectant having the chemical composition of a phosphomono- or phosphodiester catabolite of a phosphoglyceride free of fatty acid residues into said cellular matter in a concentration at least twice the concentration of the catabolite normally found in said matter and lowering the temperature of the cellular matter to storage temperature.

18. The process of claim 17 where the cryoprotectant is a mixture of one or more members selected from the group of phophomono and phosphodiester catabolites of a phosphoglyceride.

19. The process of claim 17 separated from its host.

20. The process of claim 17 where the cryoprotectant comprises at least one glycerol phosphoryl ester.

21. The process of claim 20 where the storage temperature does not exceed 0° C.

22. The process of claim 20 where the cryoprotectant is selected from the group of glycerol phosphorylcholine, glycerol phosphorylethanolamine, glycerol phosphorylserine, glycerol phosphorylglycerol, glycerol phosphorylinositol, phosphoryglycerol, phosphorylcholine, phosphorylethanolamine, and serine ethanolaminephosphoryl diester.

23. The process of claim 22 where the cryoprotectant is glycerol phosphorylcholine.

24. The process of claim 22 where the cryoprotectant is glycerol phosphorylethanolamine.

25. The process of claim 20 where the concentration of the cryoprotectant within its solution varies between 1 and 500 mM.

26. The process of claim 21 where the storage temperature is lowered to below -4° C.

27. The process of claim 17 where the cellular matter is vegetable.

28. The process of claim 17 where the cellular matter is animal.

29. A cryopreservation solution comprising an aqueous solution containing a cryopreservant agent having the chemical composition of a phosphomono- or phosphodiester catabolite of a phosphoglyceride free of fatty acid residues in a concentration varying from 1 to 500 mM, said solution being maintained at physiological pH.

30. The cryopreservation solution of claim 22 where the cryoprotectant is a mixture of one or more members selected from the group of phophomono and phosphodiester catabolites of a phoshoglyceride.

31. The cryopreservation solution of claim 29 where the concentration of the catabolite varies between 10 and 50 mM.

32. The cryopreservation solution of claim 29 containing an osmolarity adjustor in an amount sufficient to provide a solution osmolarity of between about 200 and 500 mOsm/kg.

33. The cryopreservation solution of claim 32 where the osmolarity adjustor is present in an amount sufficient to provide a solution osmolarity of between about 300 and 400 mOsm/kg.

34. The cryopreservation solution of claim 32 where the osmolality adjustor is glucose.

35. The cryopreservation solution of claim 29 containing a pH adjustor.

36. The cryopreservation solution of claim 29 where the pH adjustor provides a pH between 6.5 and 7.5.

Neu eingereicht / Newly filed
Nouvellement déposé

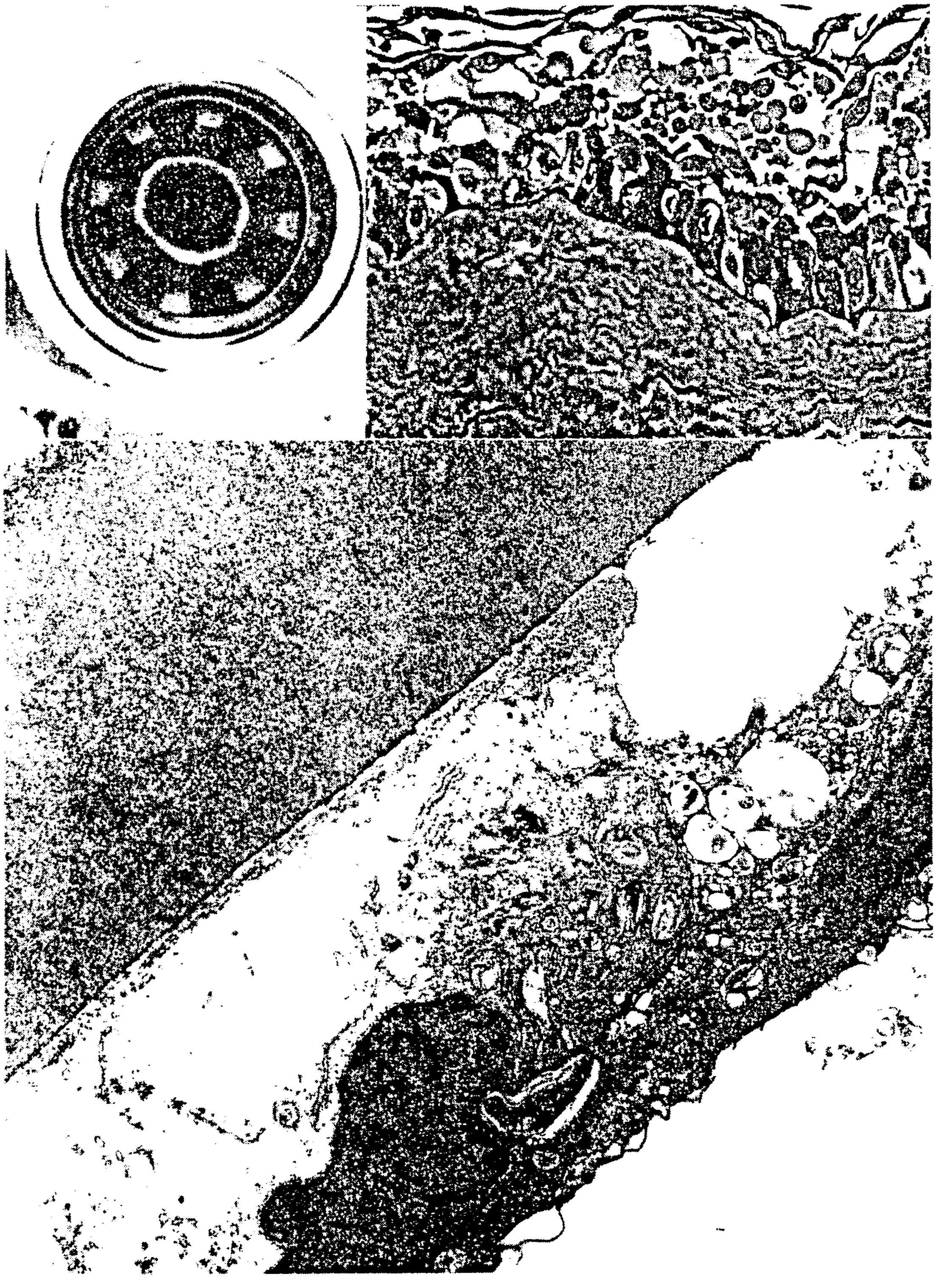

FIG. 1

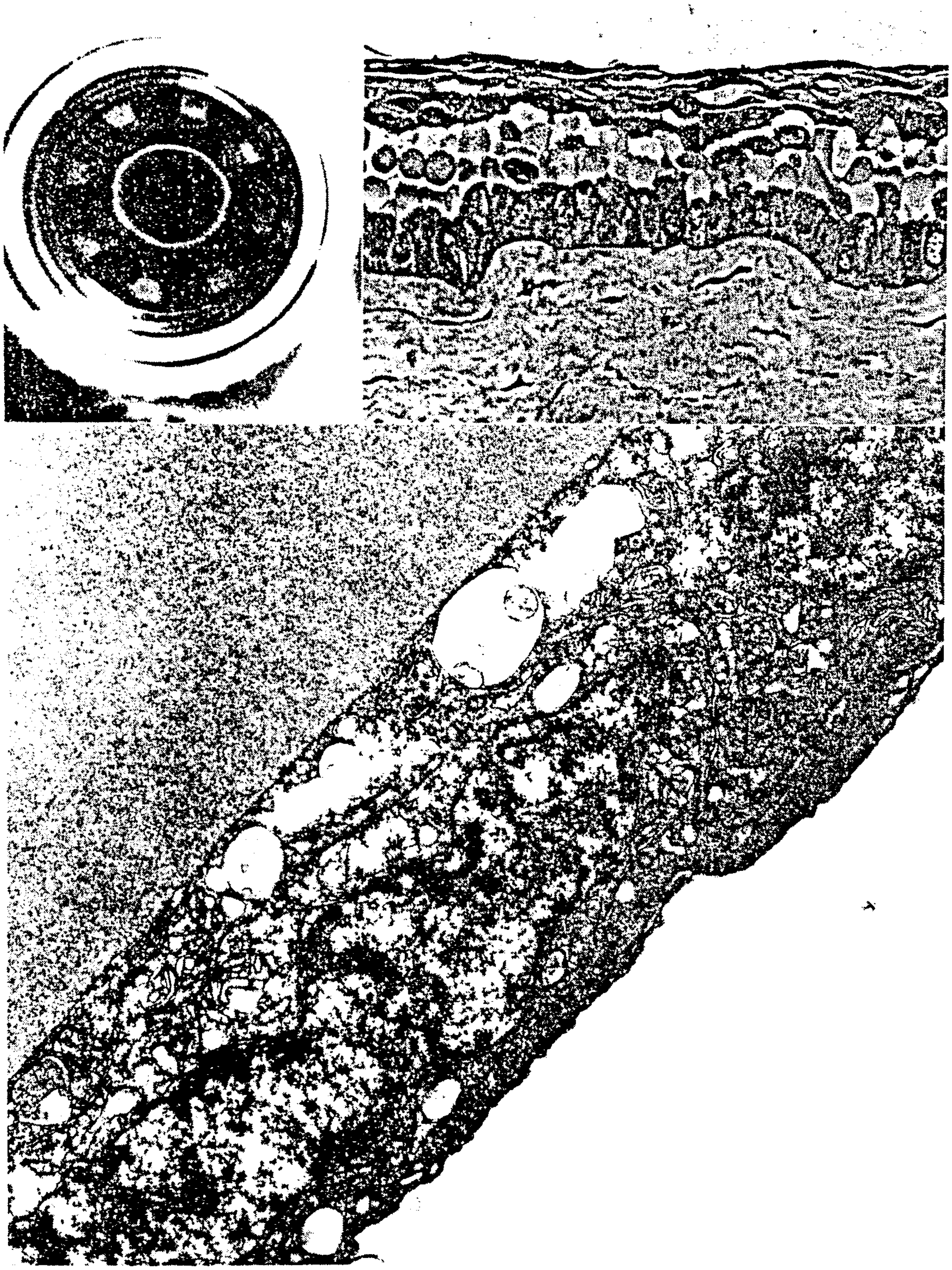

FIG. 2

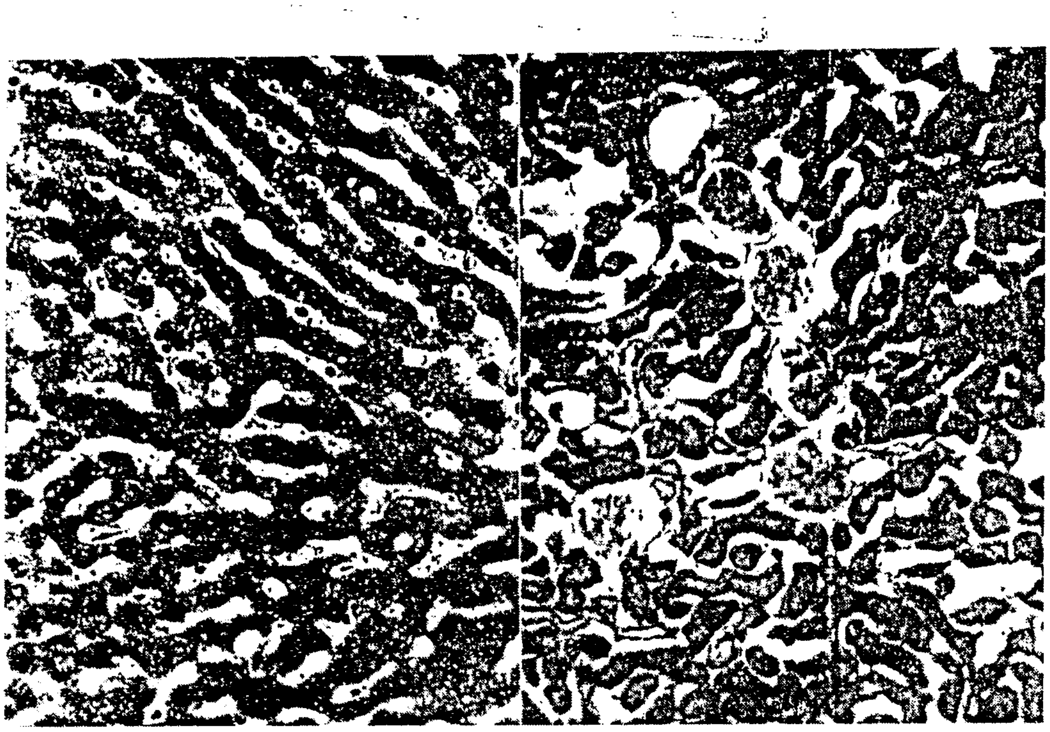

FIG. 4

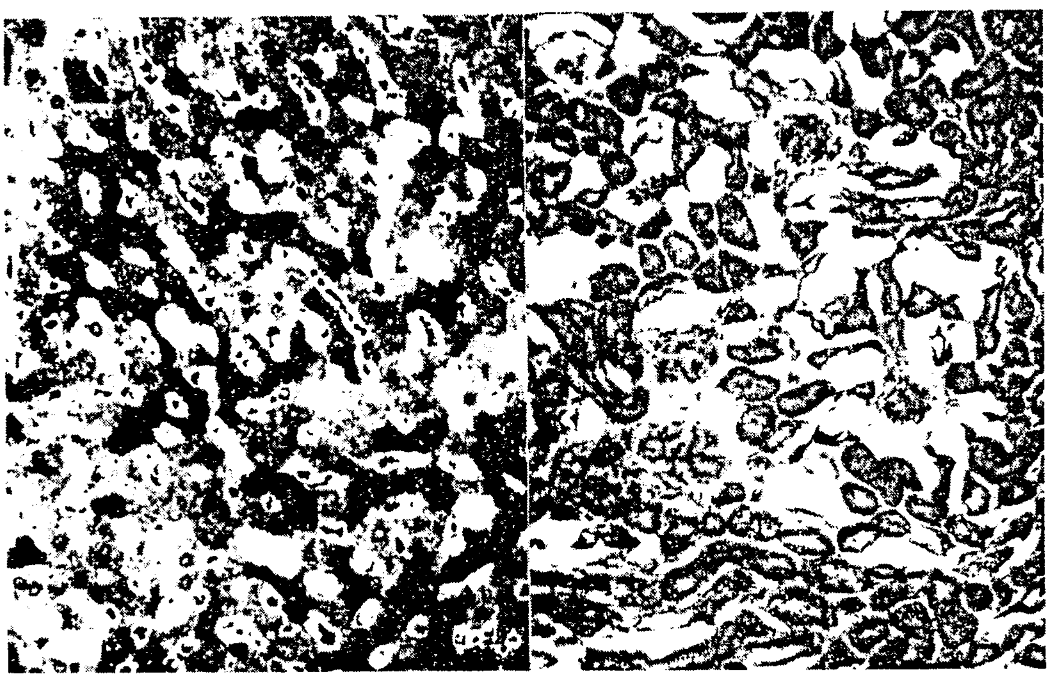

FIG. 3

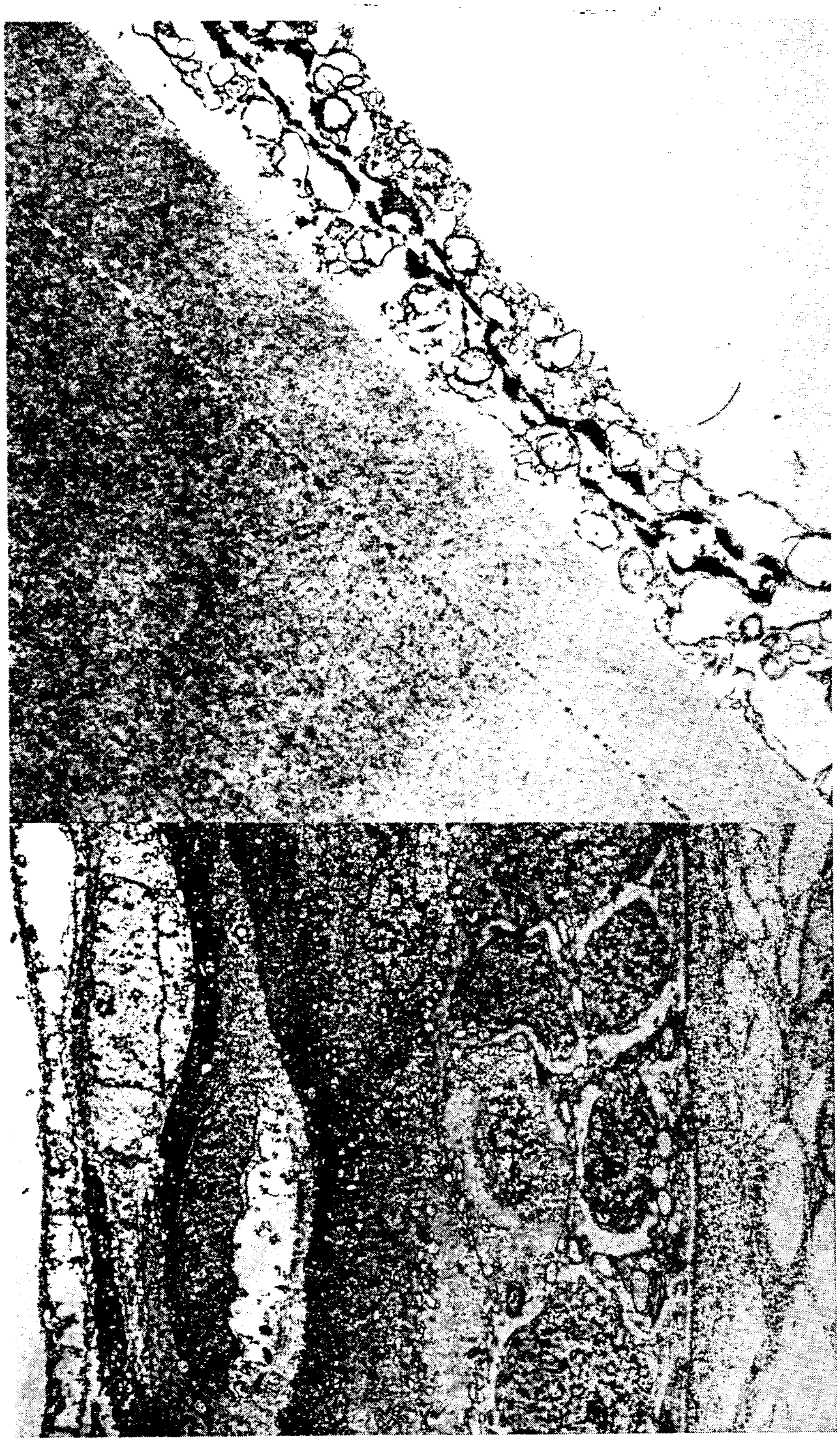

FIG.5

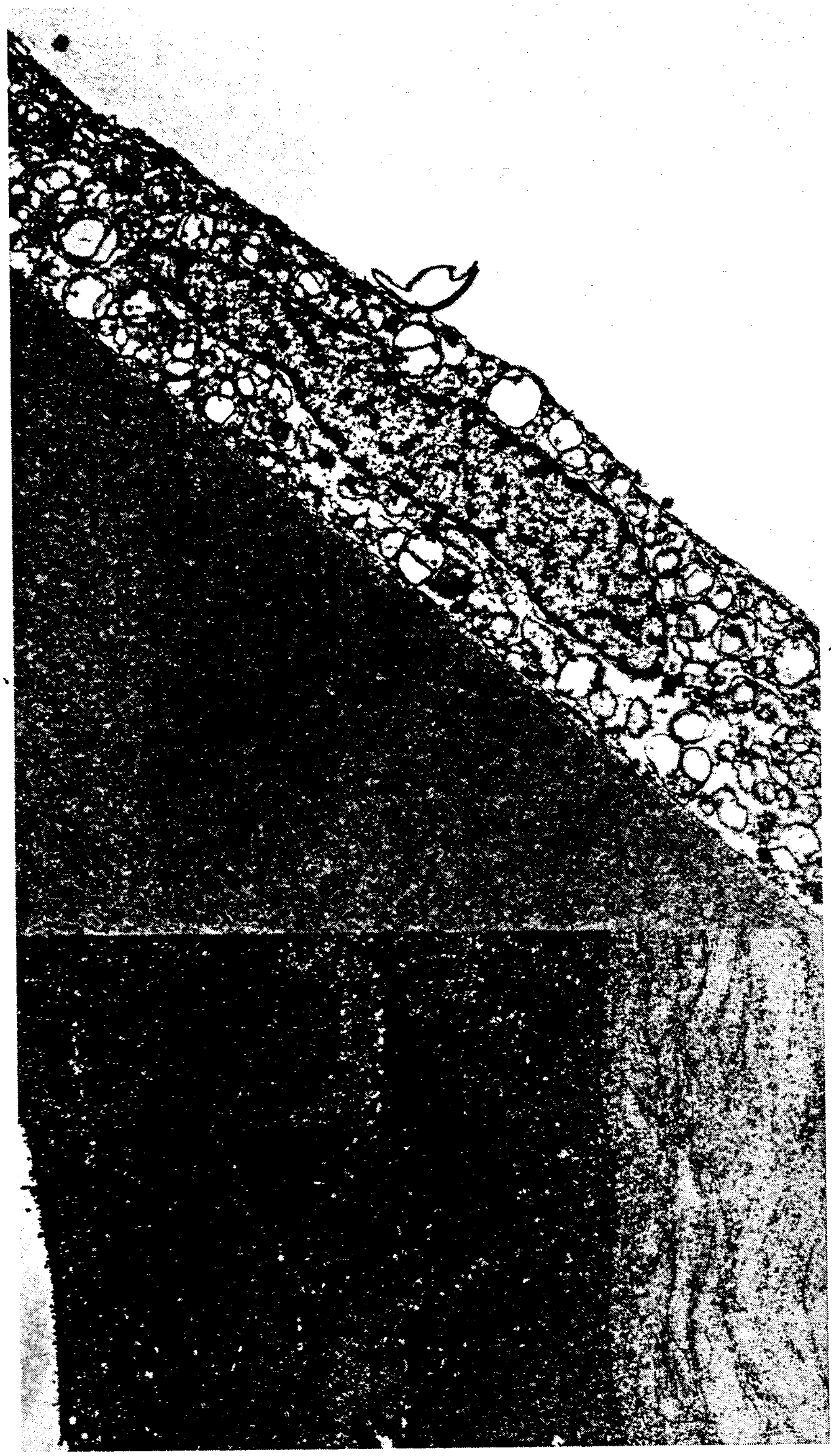

FIG. 6